# EUROPEAN PATENT APPLICATION

(11) **EP 1 650 717 A1**
(43) Date of publication of application: **26.04.2006**
(21) Application number: 05019463.8
(22) Date of filing: 07.09.2005
(51) Int. Cl.: G07F 7/10

(54) **Portable electronic apparatus and method of updating application in portable electronic apparatus**

(30) Priority: 21.10.2004 JP 2004307014
(71) Applicant: KABUSHIKI KAISHA TOSHIBA, Tokyo 105-8001 (JP)
(72) Inventor: Sakata, Yasuji, Minato-ku, Tokyo 105-8001 (JP)
(74) Representative: Kramer - Barske - Schmidtchen

(57) **Abstract**

In the case where a portable electronic apparatus (1) having a rewritable non-volatile memory (15) updates a first application stored in a storage area (32) of the non-volatile memory (15) with a second application, the apparatus (1) installs the second application for updating a first application on a storage area (42) of the non-volatile memory (15) while retaining information for use in the first application stored in the storage area (32) of the non-volatile memory (15) and restores (S63) the retained information for use in the first application as the information for use in the installed second application.

## Description

The present invention relates to a portable electronic apparatus such as an IC card capable of executing an application program installed in a writable or rewritable non-volatile memory and a method of updating an application in the portable electronic apparatus.

Conventionally, as a portable electronic apparatus, an IC card made of a plastic plate in which an IC chip serving as a memory or CPU is embedded has been available. In a conventional IC card, an application program (application) is often created using language unique to the manufacturer of the IC card (IC chip). Further, in the conventional IC card, an application is often stored in a non-rewritable ROM. In the case of an IC card (IC chip) in which an application is stored in a non-rewritable ROM, it is difficult, in practice, for a manufacturer other than the manufacturer of this IC card to create an application for it and add a new application to the IC card or delete the application from the IC card after the operation.

In some IC cards, an application is stored in a rewritable non-volatile memory. For example, in the case of Java card (Java® is a registered mark of Sun Microsystems, Inc.), an application (hereinafter also referred to as "applet") created using Java-language is stored in a rewritable non-volatile memory in an IC card. Thus, in this case, a person with authority, such as a card publisher, can add a new application to the Java card or delete the application from the card.

At application update time, in the above IC card to which a new application can be added or from which the application therein can be deleted, a new application is installed after the existing application has entirely been deleted from the IC card. In this case, information (application information such as data structure and actual data) that the existing application uses is deleted with an application main body. That is, when a new application is installed in the conventional IC card, application information related to the existing application is lost.

According to an aspect of the present invention, there is provided a portable electronic apparatus capable of effectively execute application update processing and a method of updating an application in the portable electronic apparatus.

According to an aspect of the present invention, there is provided a portable electronic apparatus having a rewritable non-volatile memory comprising: an installation processing section that installs a second application for updating a first application on a storage area of the non-volatile memory while retaining information for use in the first application stored in a storage area of the non-volatile memory; and a restoration processing section that restores the retained information for use in the first application as information for use in the second application that has been installed by the installation processing section.

According to another aspect of the present invention, there is provided a method of updating an application in a portable electronic apparatus having a rewritable non-volatile memory, comprising: installing a second application for updating a first application on a storage area of the non-volatile memory while retaining information for use in the first application stored in a storage area of the non-volatile memory; and restoring the retained information for use in the first application as information for use in the installed second application.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a configuration example of an IC card system according to an embodiment of the present invention;
FIG. 2 is a block diagram schematically showing a hardware configuration of an IC card;
FIG. 3 is a view schematically showing a software configuration of an IC card;
FIG. 4 is a conceptual view for explaining a storage state of a card OS, load file, and application instance in an IC card;
FIG. 5 is a conceptual view for explaining an application loading and application installation;
FIG. 6 is a conceptual view for explaining an example of first update processing for an application;
FIG. 7 is a flowchart for explaining the first update processing for an application;
FIG. 8 is a conceptual view for explaining an example of second update processing for an application;
FIG. 9 is a flowchart for explaining the second update processing for an application;
FIG. 10 is a conceptual view for explaining an example of third update processing for an application; and
FIG. 11 is a flowchart for explaining the third update processing for an application.

An embodiment of the present invention will be described below with reference to the accompanying drawings.

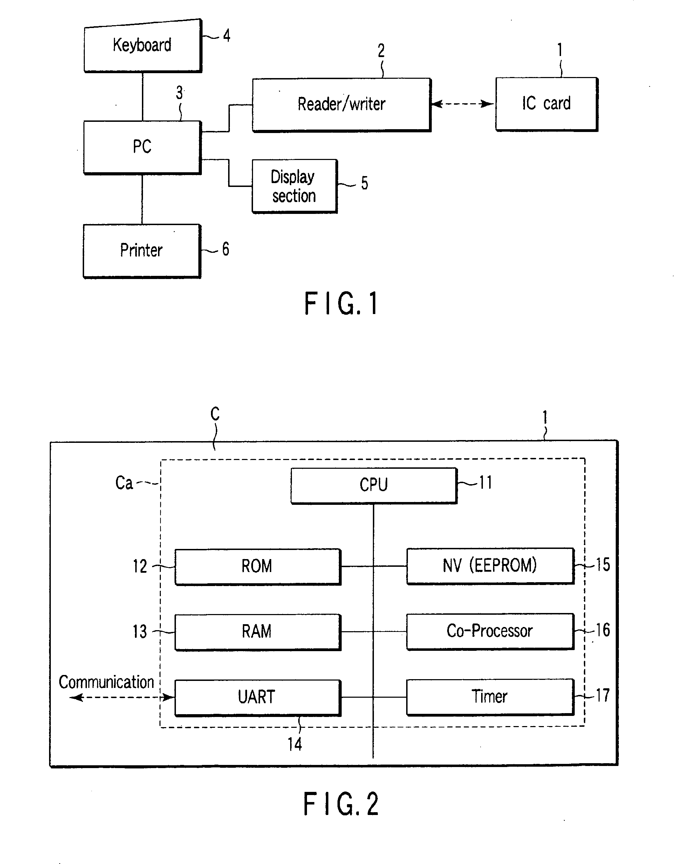

FIG. 1 is a view showing a configuration example of an IC card system according to an embodiment of the present invention. The IC card system includes an IC card 1 serving as a portable electronic apparatus, a reader/writer 2, a personal computer (hereinafter, referred to as merely "PC") 3, a keyboard 4, a display section 5, and a printer 6.

The IC card 1 is a portable electronic apparatus. The IC card 1 is, for example, a card-type electronic apparatus in which an IC chip is embedded. As a portable electronic apparatus, mobile terminal equipment having the same function as the IC card 1 may be used.

The reader/writer 2, PC 3, keyboard 4, display section 5, and printer 6 function as a host device for the IC card 1. The reader/writer 2 acts as a communication interface for exchanging data with the IC card 1. The PC 3 acts as a controller of the host devices. For example, the PC 3 exchanges data with the IC card 1 through the reader/writer 2. The keyboard 4 is an operation section through which a user inputs an operation instruction. The information input through the keyboard 4 is sent to the PC 3. The display section 5 is constituted by a display unit whose display contents are controlled by the PC 3. The printer 6 performs printing according to a printing instruction from the PC 3.

An example of a hardware configuration of the IC card 1 will schematically be described.

FIG. 2 is a block diagram schematically showing a hardware configuration of the IC card serving as a portable electronic apparatus.

As shown in FIG. 2, the IC card 1 includes a CPU (Central Processing Unit) 11, a ROM (Read Only Memory) 12, a RAM (Random Access Memory) 13, a communication unit (UART) 14, a non-volatile memory (NV (EEPROM)) 15, a co-processor 16, a timer 17, and the like. Further, as shown in FIG. 2, a module Ca including the CPU 11, ROM 12, RAM 13, communication unit 14, non-volatile memory 15, co-processor 16 and timer 17 is embedded in a card-shaped body C of the IC card 1.

The CPU 11 performs overall management and control for the IC card 1. The CPU 11 operates according to a control program and the like and acts as a processing section that performs various processing or determination section. The ROM 12 is a non-volatile memory in which the control program for the CPU 11 is stored. The RAM 13 is a volatile memory acting as a working memory. The communication unit 14 acts as a transmission section that transmits data or a reception section that receives data. The communication unit 14 is a communication interface for the IC card 1 to communicate with the host devices through the reader/writer 2.

The non-volatile memory 15 is a rewritable non-volatile memory that stores various data or application programs (application). Details of the data to be stored in the non-volatile memory 15 will be described later. The co-processor 16 gives assistance in computation such as encryption or decryption. The timer 17 measures time.

In the case of the IC card 1 is a contact type (that is, IC card 1 performs data communication by physically contacting the reader/writer 2), the communication unit 14 includes a contact section for physically contacting a contact portion of the reader/writer 3, a communication controller, and the like. In the case of the IC card 1 is a non-contact type (that is, IC card 1 performs data communication with the reader/writer 2 through a wireless communication), the communication unit 14 includes an antenna for transmitting and receiving a radio wave, a communication controller, and the like.

An example of a software configuration of the IC card 1 will schematically be described.

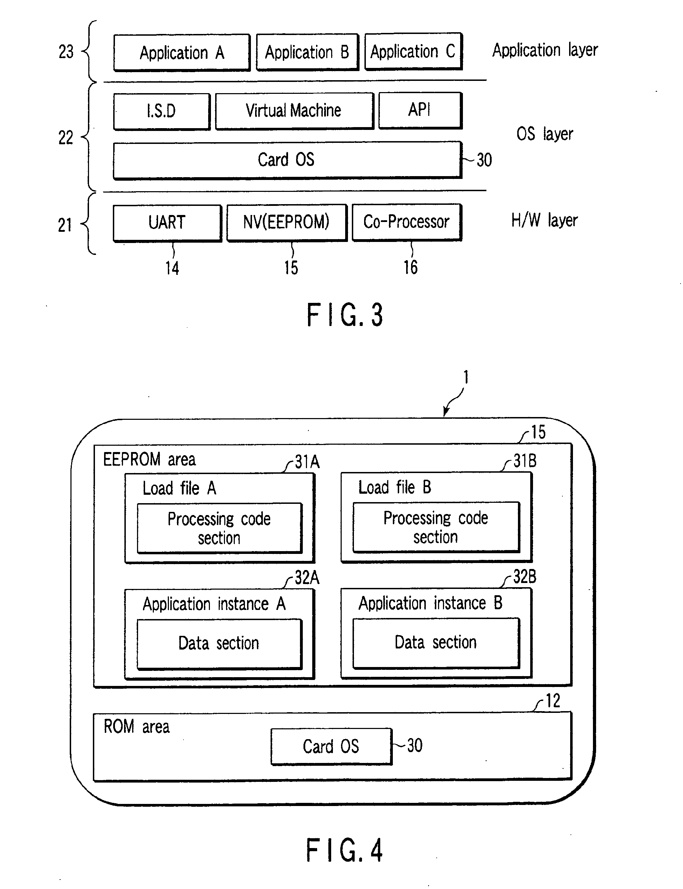

FIG. 3 is a block diagram schematically showing a software configuration of the IC card. In FIG. 3, the IC card 1 serves as a Java card.

As shown in FIG. 3, the software configuration of the IC card 1 is constituted by a hardware (H/W) layer 21, an OS (Operating System) layer 22, and an application (applet) layer 23. The application layer 23 is the uppermost layer, and OS layer 22 is situated above the H/W layer 21.

The H/W layer 21 includes hardware such as the communication unit 14, non-volatile memory 15, and co-processor 16. The H/W layer 21 is controlled by a card OS 30 of the OS (Operating System) layer 22.

In the OS layer 22, modules such as a virtual machine, ISD (Issuer Security Domain) and API (Application Interface) group are installed in the card OS 30.

The virtual machine is a module representing a configuration for running the Java card 1. The ISD is a module for managing respective applications (applets) in the application layer 23. The API group is a module representing API serving as a function used in the application.

The application layer 23 includes a plurality of applications (application A, application B, application C). Each of the applications in the application layer 23 uses the API to realize various processing. Entities of the applications are stored in the non-volatile memory 15 and the like.

Applications in the IC card 1 having the above configuration will next be described.

Firstly, applications to be installed in the non-volatile memory 15 of the IC card 1 will be described.

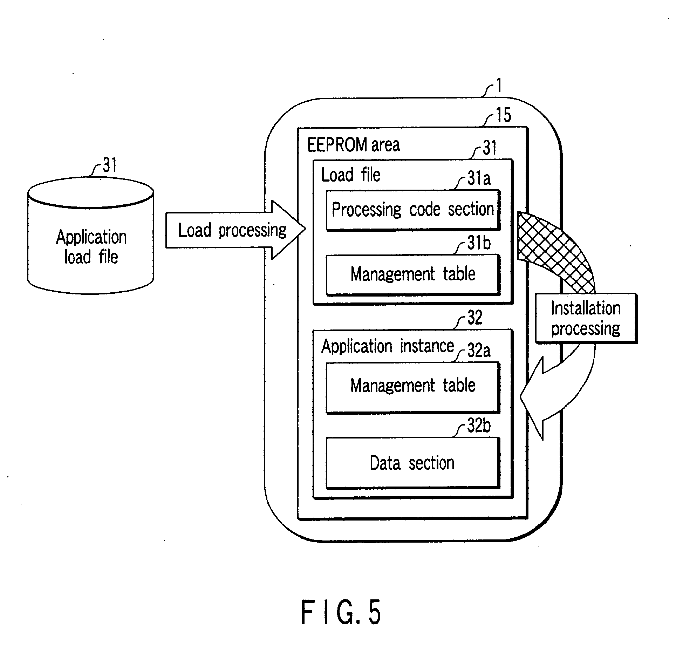

FIG. 4 is a view showing an example of a load file 31 loaded in the non-volatile memory 15 and instance 32 of the application installed based on the load file 31. FIG. 5 is a view schematically showing processing of installing an application on the non-volatile memory 15.

As shown in FIG. 4, the card OS 30 is stored in the ROM 12 of the IC card 1. The card OS 30 has a function for executing various processing according to a request from the application installed in the non-volatile memory 15. Further, as shown in FIG. 4, load files 31A, 31B and application instances (hereinafter referred to as merely "instances") 32A, 32B are stored for respective application A and B in the non-volatile memory 15 of the IC card 1. Each of the load files 31A, 31B is a file that is loaded from the host device as an application and has a processing code section that stores a processing code. The instances 32A, 32B are entities (program code, data set, and the like) that are generated from the load files 31A, 31B through installation processing. Each of the instances 32A, 32B has a data section that stores data and the like generated from the load files 31A, 32B. A plurality of instances can be generated for one application.

As shown in FIG. 5, the IC card 1 stores the application load file 31 in the non-volatile memory 15 according to a load command from the host device. Further, the IC card 1 that has stored the load file 31 in the non-volatile memory 15 performs application installation according to an install command from the host device. After the installation has been completed, the application enters an executable state.

For example, the host device sends a load command and the load file 31 of the application to be installed to the IC card 1. Upon receiving the load command from the host device, the IC card 1 allows the card OS 30 to execute load processing. That is, the card OS 30 executes load processing to store the load file 31 from the host device in the non-volatile memory 15.

When the loading of the load file 31 has been completed, the host device sends an install command to the IC card 1. Upon receiving the install command from the host device, the IC card 1 allows the card OS 30 to execute installation processing. The card OS 30 executes the installation processing based on the load file that has been stored in the non-volatile memory 15 by the load processing. In the installation processing, the card OS 30 installs the instance 32 as an entity of the application in the non-volatile memory 15 based on the load file 31 stored in the non-volatile memory 15.

After the load processing and installation processing have been completed, the load file 31 and instance 32 are stored in the non-volatile memory 15 of the IC card 1. The load file 31 has a processing code section 31a that stores a processing code and a management table 31b. The instance 32 has a management table 32a and a data section 32b. The application load file 31 and application instance 32 are associated with each other by the management tables 31b, 32a.

Next, update processing for an application installed in the IC card 1 will be described.

Main terms used in the following description are defined as follows.
- Application in IC card (hereinafter also referred to as merely "application"):
   An application in the IC card is an application program installed in the non-volatile memory 15 of the IC card 1. The application in the IC card has a processing code and instance data for executing various processing.
- Information used by application (hereinafter also referred to as merely "application information"):
   Application information is data unique to a user. Application information is information recorded at the operation time of the IC card. The application information is a data structure of the data and actual data that the application holds. The application information is stored in the data section of the application instance. The application information needs to be kept held in the case where the application is updated. The conventional IC card cannot keep holding the application information after the application has been updated.
- Application in host device (hereinafter also referred to as merely "host application"):
   A host application is an application that operates on the PC 3 as a controller of the host devices. The host application performs various processing while exchanging a command with the IC card. For example, the host application loads an application file into the IC card and installs the application in the IC card while exchanging a command with the IC card. Processing for publishing the IC card is also executed by the host application.

First update processing for updating an application in the IC card 1 will next be described.

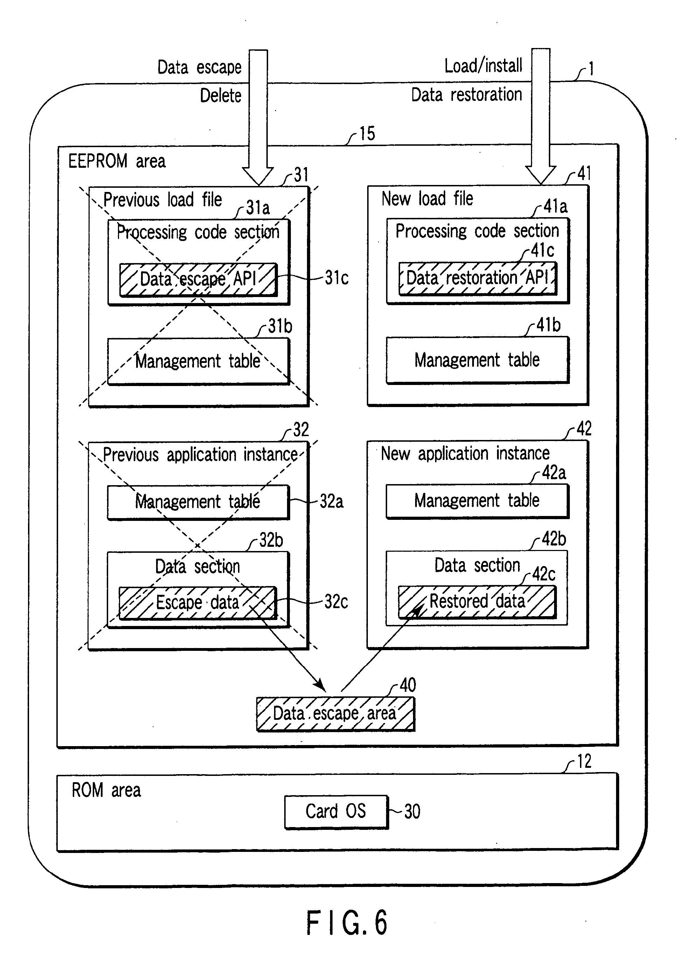

FIG. 6 is a conceptual view for explaining an example of the first update processing for an application. The example of FIG. 6 conceptually shows an application to be updated (previous application) and application for update (new application) in the non-volatile memory 15 in the IC card 1. The previous application and new application have the same name (class name, application ID) in a command from the host application.

In the example of FIG. 6, a data escape API 31c that temporarily saves information used in an application (application information) as escape data 32c is prepared in the load file 31 of the previous application. Further, a data restoration API 41c that restores the temporarily saved application information is prepared in the load file 41 of the new application. The data escape API 31c writes the application information in a data escape area 40 which is a particular area in the non-volatile memory (EEPROM) 15. The data restoration API 14c restores the application information as the escape data 32c that has been stored in the data escape area 40 and applies the data to the instance of the new application as restored data 42c.

The data escape API 31c and data restoration API 41c are implemented, for example, in the processing code sections 31a and 41a of the load files 31 and 41 of the respective applications. The processing of writing the application information by the data escape API 31c is started by the card OS 30 when the authentication between the IC card 1 and host application that updates the application is established. Similarly, the processing of reading out data by the data restoration API 41c is started by the card OS 30 when the authentication between the IC card 1 and host application that updates the application is established.

The flow of the first update processing will next be described.

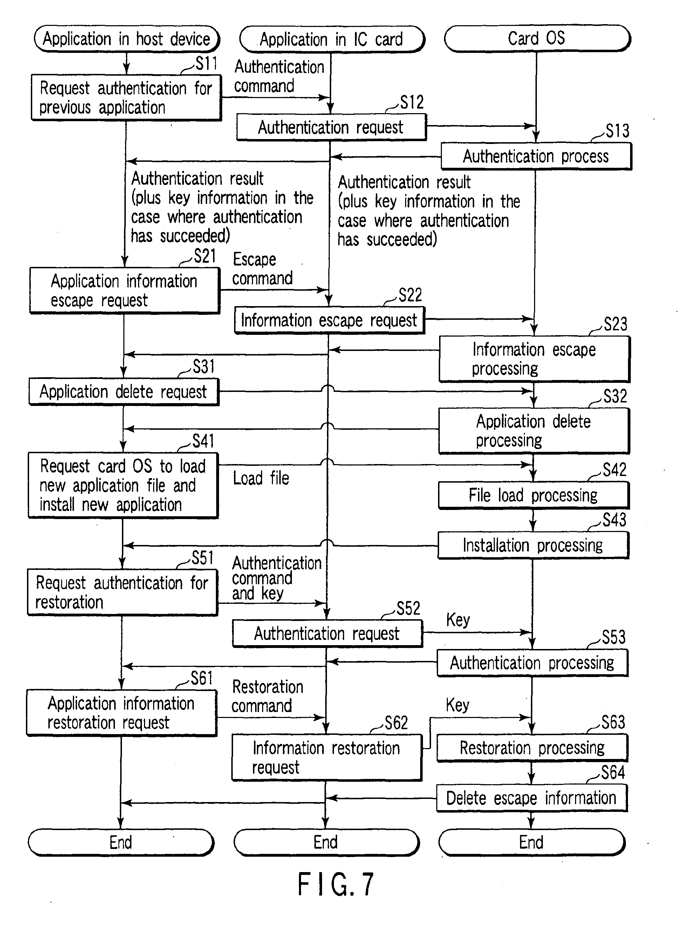

FIG. 7 is a flowchart for explaining the first update processing.

Firstly, a person (system administrator, etc.) that performs the update processing for an application in the IC card 1 uses the keyboard 4 of the host device to issue an instruction for updating an application in the IC card 1. Upon receiving the instruction, the PC 3 activates a host application for updating an application in the IC card 1. After the host application has been activated, authentication processing is made between the host application in the PC 3 and IC card 1 (steps S11 to S13). The authentication processing is made for checking whether the host application has the authority to update the existing application (previous application) in the IC card 1. In the authentication processing, the host application in the PC 3 transmits an authentication command for the previous application to the IC card 1 through the reader/writer 2 (step S11).

Upon receiving the authentication command from the host application, the previous application in the IC card 1 requests the card OS 30 in the OS layer 22 to perform authentication processing according to the authentication command (step S12). In response to the authentication request from the previous application, the card OS 30 calls up an authentication API from the API group and performs authentication processing using the called up authentication API (step S13).

The card OS 30 notifies the previous application of the information indicating the result of the authentication processing using the authentication API. When the authentication has succeeded, the card OS 30 transmits the information indicating the success of the authentication and key information serving as an authentication key for restoration (to be described later) to the previous application. The previous application transmits the information (including the key information in the case of the authentication has succeeded) indicating the authentication result from the card OS 30 to the application in the host device. With this information, the application in the host device recognizes success or failure of the authentication with the previous application. When the authentication has succeeded, the host application receives the notification indicating success of the authentication and the key information.

When the authentication in the authentication processing has succeeded, the application in the host device and IC card 1 perform escape processing for allowing the information (application information of previous application) used in the authenticated previous application to temporarily escape into data escape area 40 as escape data 32c (steps S21 to S23). In the escape processing, the host application transmits an escape command for allowing the application information of the authenticated previous application to escape, to the IC card 1 (step S21).

The IC card 1 receives the escape command from the host application, and the previous application of the IC card 1 requests the card OS 30 to perform the application information escape processing according to the escape command (step S22). Upon receiving the application information escape request from the previous application, the card OS 30 performs the escape processing for allowing the application information existing in the data section 32b in the instance 32 of the previous application to temporarily escape (to be saved) as the escape data 32c (step S23). That is, the card OS 30 calls up the data escape API 31c from the processing code section 31a in the load file 31 of the previous application in response to the escape processing request from the previous application. After calling up the data escape API 31c, the card OS 30 uses the data escape API 31c to perform the application information escape processing.

In the application information escape processing, the card OS 30 extracts, as the escape data 32c, the application information (application information of the previous application) also used in the updated application (new application) from the data section 32b in the instance 32 of the previous application to be updated. After extracting the application information as the escape data 32c from the previous application, the card OS 30 saves the extracted application information in the data escape area 40. The data escape area 40 is a particular area in the non-volatile memory 15 specified by the data escape API 32c. The data escape area 40 is set separately from the storage area for the load files 31 and 41 of the respective applications and storage area for the instances 32 and 42 of the respective applications in the storage area of the non-volatile memory 15.

After the application information escape processing has been completed, the card OS 30 notifies the previous application of information indicating the completion of the application information escape processing. Upon receiving the notification, the previous application notifies the host application of information indicating the completion of the application information escape processing. As a result, the application in the host device recognizes that the escape of the application information of the previous application has been completed.

After the escape of the application information of the previous application has been completed, the host application and IC card 1 perform delete processing of deleting the previous application (step S31 and S32). In the delete processing, the host application transmits a command for deleting the previous application to the card OS 30 of the IC card 1 (step S31).

Upon receiving the delete request from the host application, the card OS 30 of the IC card 1 performs delete processing of deleting the load file 31 and application instance 32 of the previous application stored in the non-volatile memory 15 (step S32). In the first update processing, the load file 31 and instance 32 of the previous application are entirely deleted in the process of the previous application delete processing.

After the delete of the previous application has been completed, the card OS 30 notifies the host application of information indicating that the previous application has been deleted. As a result, the application in the host device recognizes that the previous application has been deleted.

After the previous application has been deleted, the host application and IC card 1 perform load and installation processing of installing an application (new application) for updating the deleted previous application (step S41 to S43). In this processing, the host application transmits a load command and a load file of the new application and, at the same time, uses an install command to request the card OS 30 to perform installation processing according to the load file of the new application (step S41).

The load file of the new application is transmitted from the host application, and the card OS 30 of the IC card 1 performs load processing of storing the load file 41 received from the host application in the non-volatile memory 15 (step S42). In the load processing, the card OS 30 stores, as the load file 41 of the new application, the file received from the host application in the non-volatile memory 15.

After the load processing of the load file 41 of the new application has been completed, the card OS 30 performs installation processing according to the load file 41 stored in the non-volatile memory 15 (step S43). In the installation processing, the card OS 30 generates, as an instance 42 of the new application, the data section 42b and management table 42a from the load file 41 of the new application and stores them in the non-volatile memory 15.

After the completion of the new application installation processing, the card OS 30 notifies the host application of information indication that the install of the new application has been completed. As a result, the application in the host device recognizes that the install of the new application has been completed.

After the new application has been installed, the host application and IC card 1 perform authentication processing (authentication processing for restoration) (steps S51 to S53). This authentication processing is made for checking whether the information to be used in the new application is allowed to be restored based on the application information of the previous application stored in the data escape area 40. The authentication for restoration is executed using the key information obtained as a result of the authentication processing of steps S11 to S13.

In the authentication processing for restoration, the host application transmits an authentication command and the key information obtained in the previous authentication processing (steps S11 to S13) to the IC card 1 (step S51) through the reader/writer 2.

The IC card 1 receives the authentication command and key information from the host application, and the new application requests the card OS 30 to perform authentication processing according to the key information received together with the authentication command (step S52). In response to the authentication processing request from the new application, the card OS 30 calls up the authentication API from the API group and uses the authentication API to perform authentication according to the key information (step S53).

After the authentication processing according to the key information has been completed, the card OS 30 notifies the new application of information indicating the result of the authentication processing for restoration. The new application transmits the information indicating the result of the authentication processing for restoration from the card OS 30 to the application in the host device. As a result, the application in the host device recognizes the success or failure of the authentication for restoration with the IC card 1.

When the authentication in the authentication processing for restoration has succeeded, the application in the host device and IC card 1 perform restoration processing of restoring, as the application information of the new application, the application information of the previous application stored in the data escape area 40 (steps S61 to 64). In the restoration processing, the host application transmits a restoration command for restoring the application information of the previous application stored in the data escape area 40 to the IC card 1 (step S61).

The IC card 1 receives the restoration command from the host application, and the new application requests the card OS 30 to perform application information restoration processing according to the restoration command (step S62). Upon receiving the application information restoration request from the new application, the card OS 30 performs the restoration processing of restoring the application information of the previous application saved in the data escape area 40'as the application information of the new application (step S63).

That is, in response to the restoration processing request from the new application, the card OS 30 calls up the data restoration API 41c from the processing code section 41a in the load file 41 of the new application. After calling up the data restoration API 41c, the card OS 30 performs the application information restoration processing according to the called up data restoration API 41c.

In the application information restoration processing, the card OS 30 reads out the application information of the previous application from the data escape area 40. After reading out the application information of the previous application, the card OS 30 updates the read out information with information corresponding to the new application and stores the updated information in the data section 42b in the instance 42 of the new application. At this time, the card OS 30 deletes the data (variable) that is not used in the new application and writes data (variable) that is newly added to the new application as an initial value. As a result, application information based on the application information of the previous application is applied to the instance 42 of the new application. After the application information of the new application is restored from the application information of the previous application stored in the data escape area 40, the card OS 30 deletes the information stored in the data escape area 40.

After the above restoration processing has been completed, the card OS 30 notifies the new application of information indicating that the application information restoration processing has been completed. Upon receiving the notification, the new application notifies the host application of the information indicating that the application information restoration processing has been completed. As a result, the application in the host device recognizes that the previous application has been updated with the new application, that is, the application update processing has been completed.

As described above, in the first update processing, the application information of the previous application is allowed to temporarily escape into the data escape area in the non-volatile memory 15 before the deletion of the previous application to be updated, and the information temporarily saved in the data escape area is applied as the application information of the new application to be installed.

As a result, an existing application can be updated using the application information of the existing application. Thus, it is possible to effectively perform the application update processing in the IC card.

The processing of allowing the application information to escape into the data escape area is realized by the data escape API stored in the processing code section in the application load file. Further, the processing of restoring, as the application information of the newly installed application, the information temporarily saved in the data escape area is realized by the data restoration API stored,in the processing code section in the load file of the new application. As described above, it is possible to carry out the above processing by adding a unique API.

Further, in the escape processing, the application information of the previous application is saved in the data escape area which is a particular area in the non-volatile memory 15 in the IC card 1. As a result, it is possible to update the previous application with the new application without outputting the application information of the previous information to the outside. This prevents leakage of the application information, thereby maintaining security.

Further, in the IC card system, only the host application that has been authenticated by the authentication processing for restoration can restore the application information of the previous application as the application information of the new application. This prevents other applications from accessing the application information of the previous application in the IC card, thereby realizing application update processing with high security.

Next, second update processing for updating the application in the IC card 1 will be described.

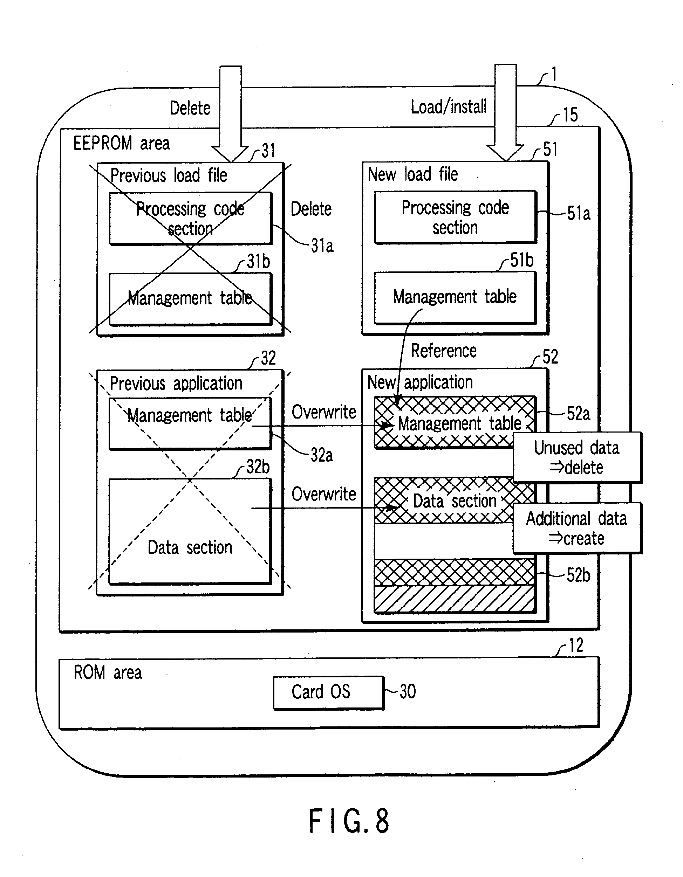

FIG. 8 is a view for explaining the second update processing. The example of FIG. 8 conceptually shows an application to be updated (previous application) and application for update (new application) in the non-volatile memory 15 in the IC card 1.

As shown in FIG. 8, in the second update processing, the instance 32 of the previous application is used to generate a part of an instance 52 of the new application. That is, in the second update processing, the instance 32 of the previous application is retained at least until the new application has been installed. In this state, a load file 51 of the new application is stored in the non-volatile memory 15 by load processing. After the load file 51 of the new application has been stored in the non-volatile memory 15, the instance 52 of the new application generates a management table 52a and a data section 52b along installation processing according to the load file 51. Further, information such as application information restored based on the instance 52 of the previous application stored in the non-volatile memory 15 is applied to the instance 52 of the new application.

As a result, the new application including the application information of the previous application is completely installed in the non-volatile memory 15 of the IC card 1. After the install of the new application has been completed, the instance of the previous application that has been retained in the non-volatile memory 15 is deleted. Thus, the application update has been completed.

The flow of the second update processing will next be described.

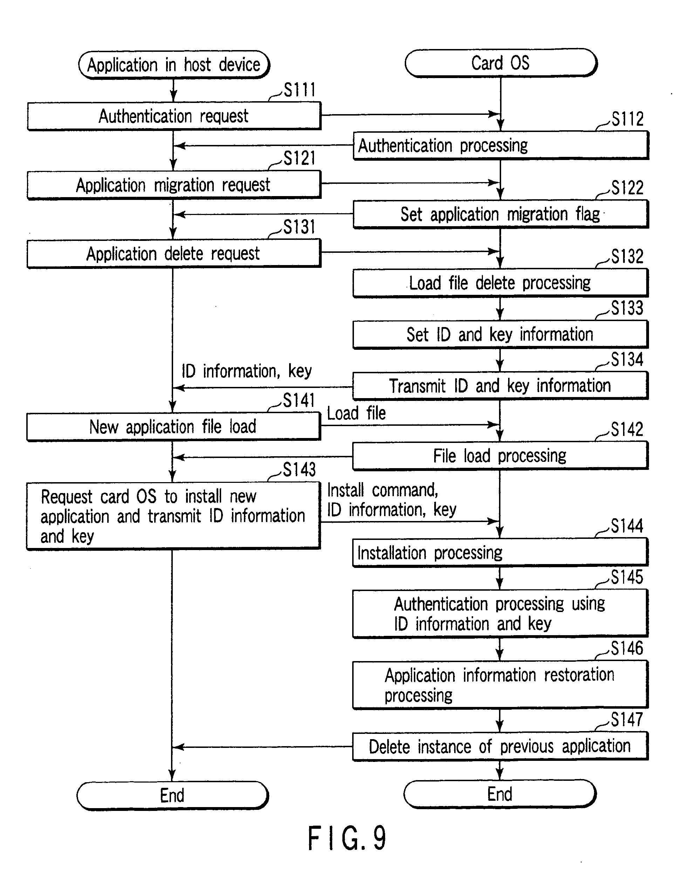

FIG. 9 is a flowchart for explaining the second update processing.

Firstly, the application in the host device and IC card 1 perform authentication processing (steps S111 and S112). The authentication processing is made for checking whether the host application has the authority to update the existing application (previous application) in the IC card 1. In the authentication processing, the host application transmits an authentication command for the previous application to the IC card 1 through the reader/writer 2 (step S111).

The IC card 1 receives the authentication command from the host application, and the card OS 30 calls up the authentication API from the API group according to the authentication processing request from the host application and uses the called up authentication API to perform authentication processing (step S112). The card OS 30 then notifies the host application of information indicating the result of the authentication processing by the authentication API. As a result, the host application recognizes success or failure of the authentication processing for updating the application of the IC card 1.

When the authentication in the authentication process has succeeded, the host application and IC card 1 set a migration flag for the application to be updated. The migration flag is information indicating that the instance 32 of the previous application is retained until the install of the new application has been completed. Therefore, the instance 32 of the previous application for which the migration flag has been set is retained until the install of the new application has been completed. In the processing of setting the migration flag, the host application requests the IC card 1 to set the migration flag for the previous application (step S121).

The IC card 1 receives a command for requesting the set of the migration flag from the host application, and the card OS 30 of the IC card 1 sets the migration flag for the previous application (step S122). The migration flag is set in the RAM 13 serving as a working memory, unused area of the non-volatile memory 15, or the like.

After setting the migration flag for the application, the card OS 30 notifies the host application of information indicating that the migration flag has been set for the application to be updated. As a result, the application in the host device recognizes that the migration flag has been set for the application to be updated.

After the migration flag has been set, the host application and IC card 1 perform delete processing of deleting the previous application (steps S131 and S132). In the delete processing, the host application transmits a command for deleting the previous application to the card OS 30 of the IC card 1 (step 5131).

Upon receiving the previous application delete request from the host application, the card OS 30 of the IC card 1 checks whether the migration flag is set for the previous application. When determining that the migration flag has been set for the previous application, the card OS 30 deletes the load file 31 in the previous application stored in the non-volatile memory 15 (step S32). At this time, the card OS 30 does not delete the instance 32 of the previous application, but keeps retaining it.

After deleting the load file 31 of the previous application, the card OS 30 generates ID information and key information for accessing the not-deleted instance 32 of the previous application (step S133). In the case where there are a plurality of instances of the previous application, a plurality of ID information and key information are generated. After generating the ID information and key information for the instance 32 of the previous application, the card OS 30 notifies the host application of information indicating that the load file 31 of the previous application has been deleted and, at the same time, transmits, as the information for accessing the instance 32 of the previous application, the ID information and key information to the host application (step S134). As a result, the application in the host device recognizes that the load file 31 of the previous application has been deleted and acquires the information for accessing the instance 32 of the previous application.

After the load file 31 of the previous application has been deleted, the host application and IC card 1 perform load processing of the load file 51 of the new application (steps S141 and S142). In the load processing, the host application transmits a load command and the load file 51 of the new application to the IC card 1 (step S141).

Upon receiving the load command and the load file of the new application from the host application, the card OS 30 of the IC card 1 performs load processing of storing the load file 51 received from the host application in the non-volatile memory 15 (step S142). In the load processing, the card OS 30 stores, as the load file 51 of the new application, the file received from the host application in the non-volatile memory 15. After the load processing of the load file 51 of the new application has been completed, the card OS 30 notifies the host application that the load processing of the load file has been completed. As a result, the host application recognizes that the load processing of the load file 51 of the new application has been completed.

After the load processing of the load file 51 of the new application has been completed, the host application and IC card 1 perform installation processing and application information restoration processing according to the load file 51 (steps S143 to S147). In this processing, the host application transmits ID information and key information as the information for accessing the instance 32 of the previous application together with an install command (step S143).

Upon receiving the install command from the host application, the card OS 30 performs installation processing according to the load file 51 stored in the non-volatile memory 15 (step S144). In the installation processing based on the load file 51, the card OS 30 generates the instance 52 of the new application from the load file 51 of the new application and stores it in the non-volatile memory 15.

After the installation processing based on the load file 51 of the new application has been completed, the card OS 30 calls up the authentication API and uses the authentication API to perform authentication processing according to the ID information and key information received from the host application (step S145). This authentication processing is made for checking whether the information to be used in the new application is allowed to be restored based on the instance 32 of the previous application retained in the non-volatile memory 15.

When the authentication processing has succeeded, the card OS 30 performs restoration processing of restoring the application information of the new application and the like based on the instance 32 of the previous application retained in the non-volatile memory 15 (step S146). In the restoration processing, the card OS 30 restores the application information to be applied to the instance 52 of the new application from the instance 32 of the previous application represented by the ID information. At this time, the card OS 30 deletes the data (variable) that is not used in the new application and writes data (variable) that is newly added to the new application as an initial value.

After the application information of the new application has been restored from the instance 32 of the previous application and has been applied to the instance 52 of the new application, the card OS 30 deletes the migration flag and the instance 32 of the previous application retained in the non-volatile memory 15 (step S147).

As described above, in the above processing, the new application is completely installed in the non-volatile memory 15, and the instance 32 of the previous application is deleted from the non-volatile memory 15. After deleting the instance 32 of the previous application, the card OS 30 notifies the host application of the completion of the installation processing of the new application. As a result, the application in the host device recognizes that the previous application has been updated with the new application, that is, the application update processing has been completed.

As described above, in the second update processing, the load file of the new application is loaded while the instance of the previous application to be updated is retained, and the information such as retained application information in the instance of the previous application is reflected in the instance of the new application installed based on the load file of the new application.

As a result, in the application update processing, it is possible to easily apply the application information of the previous application to the instance of the new application with reference to the information of the instance of the existing application. As a result, the update processing in the IC card 1 can effectively be carried out. Further, in the second update processing, the instance of the previous application is retained in the non-volatile memory, so that it is possible to apply the application information of the previous application to the application information of the new application without outputting the instance of the previous information to the outside. This prevents leakage of the application information in the IC card, thereby maintaining security.

Further, in the IC card system, only the host application that has been authenticated using the ID information and key information can apply the instance of the previous application in the IC card to restore the information to be provided for the instance of the new application. This prevents other applications that are not authenticated from accessing the instance of the previous application in the IC card, thereby realizing application update processing with high security.

Next, third update processing for updating the application in the IC card 1 will be described.

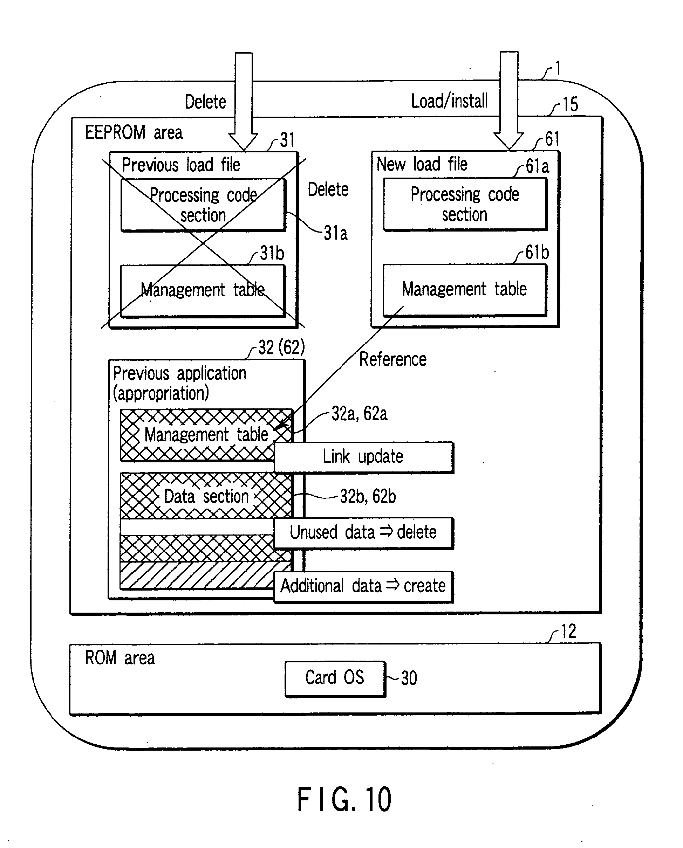

FIG. 10 is a view for explaining the third update processing. The example of FIG. 10 conceptually shows an application to be updated (previous application) and application for update (new application) in the non-volatile memory 15 in the IC card 1.

As shown in FIG. 10, in the third update processing, an instance 62 of the new application is stored in the storage area for the instance 32 of the previous application on the non-volatile memory 15.

That is, in the third update processing, the load file 51 of the new application is stored in the non-volatile memory 15 by the load processing while the instance 32 of the previous application is retained. After the load file 51 of the new application is stored, the instance 62 of the new application is installed on the instance 32 of the previous application retained in the non-volatile memory 15.

At this time, the application information existing in the instance of the previous application is used as the instance 62 of the new application. A management table 62a in the instance 62 of the new application is generated by updating it with the link information of the management table 32a in the instance of the previous application.

As a result, the instance 62 of the new application obtained by using information such as the application information in the instance 32 of the previous application is stored in the non-volatile memory 15 of the IC card 1. Thus, the application update has been completed.

The flow of the third update processing will next be described.

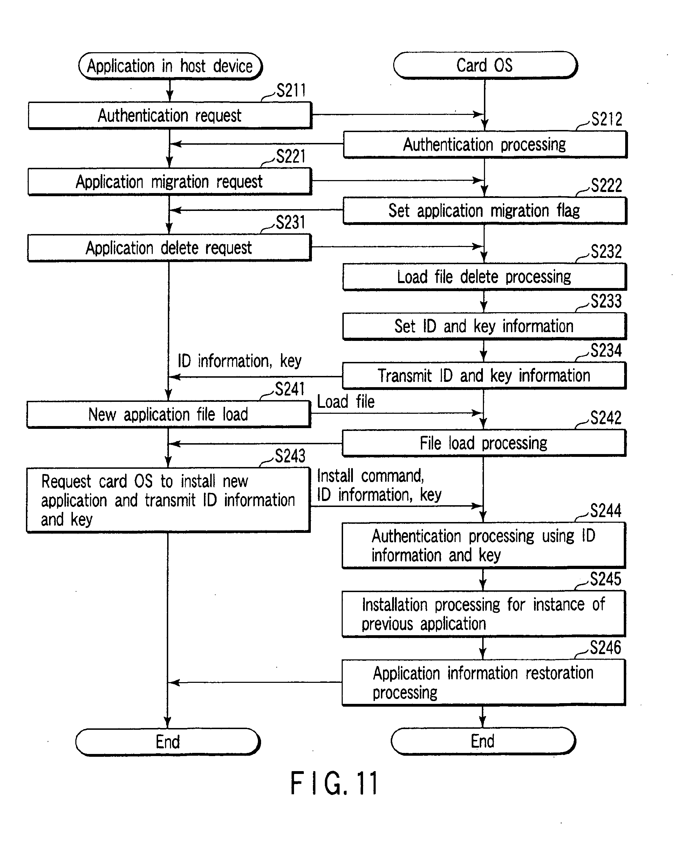

FIG. 11 is a flowchart for explaining the third update processing.

In the flow of FIG. 11, the processing from steps S211 to S242 indicates the same processing as that from steps S111 to S142 shown in FIG. 9, which has been described as the second update processing, and the detailed description of the processing from steps S211 to S242 will be omitted.

That is, in the third update processing (steps S211 to S242), the load file 61 of the new application is stored in the non-volatile memory 15 while the instance of the previous application is retained as in the case of the second update processing. In the state where the load file 61 of the new application is stored in the non-volatile memory 15, the instance 32 of the previous application is kept retained.

After load processing of the load file 61 of the new application has been completed, the host application and IC card 1 perform installation processing and application information restoration processing according to the load file 61 (steps S243 to S247). In this processing, the host application transmits, as the authentication information for accessing the instance 32 of the previous application, ID information and key information together with an install command (step 5243).

Upon receiving the install command and authentication information from the host application, the card OS 30 calls up the authentication API and uses the called up authentication API to perform authentication processing based on the ID information and key information received from the host application (step S244). The authentication processing is made for checking whether the access to the instance 32 of the previous application is allowed or not. In other words, in step S244, whether the instance of the new application is allowed to be installed on the storage area 32 for the instance of the previous application retained in the non-volatile memory 15 is checked.

When the above authentication processing has succeeded, the card OS 30 installs the new application and restores the application information according to the request from the host application. That is, when the authentication has succeeded, the card OS 30 performs installation processing based on the load file 61 and instance 32 of the previous application stored in the non-volatile memory 15 (step S245).

In the above installation processing based on the load file 61, the card OS 30 installs the instance 62 of the new application on the instance 32 of the previous application stored in the non-volatile memory 15. In the installation processing, the management table in the instance 62 of the new application is generated by updating it with the link information on the management table in the instance 32 of the previous application. The application information of the previous application is kept retained in the data section of the instance 32 of the previous application. As a result, the instance 62 of the new application is installed on the storage area for the instance 32 of the previous application on the non-volatile memory 15 with the application information kept retained.

After the instance 62 of the new application has been installed based on the load file 61 of the new application and instance 32 of the previous application, the card OS 30 performs restoration processing of restoring, as the application information of the new application, the application information of the previous information (step 5246). In the restoration processing, the application information of the previous application retained in the instance 62 of the new application on the non-volatile memory 15 is updated with application information of the new application. In the restoration processing, the card OS 30 deletes the data (variable) that is not used in the new application in the application information of the previous application and writes data (variable) that is newly added to the new application as an initial value.

After the install of the new application and restoration of the application information have been completed, the card OS 30 deletes the migration flag and notifies the application in the host device of the completion of the install of the new application.

With the above processing, the new application is completely installed on the storage area for the instance 32 of the previous application on the non-volatile memory 15. That is, with the above processing, the previous application in the non-volatile memory 15 is updated with the new application. The application in the host device recognizes that the previous application has been updated with the new application based on a notification from the IC card 1, that is, the application update processing has been completed.

As described above, in the third update processing, the IC card loads the load file 61 of the new application while retaining the instance 32 of the previous application to be updated. After the load file 61 of the new application is stored in the non-volatile memory 15, the IC card installs the new application on the storage area for the instance 32 of the previous application based on the load file 61 of the new application while retaining the application information of the previous application. After that, the IC card that has installed the new application on the storage area for the instance 32 of the previous application updates the application information of the previous application existing in the instance 62 of the new application according to the new application.

As a result, in the application update processing, it is possible to easily apply the information of the instance of the previous application to that of the new application. Thus, in the IC card, it is possible to effectively perform the application update processing.

Further, according to the third update processing, the IC card installs the new application on the instance of the previous application retained in the non-volatile memory. As a result, it is possible to update the previous application with the new application without outputting the application information of the previous information to the outside. This prevents leakage of the application information in the IC card, thereby maintaining security.

Further, in the IC card system, only the host application that has been authenticated by using the ID information and key information can apply the instance of the previous application in the IC card to the instance of the new application. This prevents not-authenticated other external applications from accessing the instance of the previous application in the IC card. As a result, application update processing with high security can be realized.

As described above, in the IC card according the above embodiment, an application is updated using the application information of the existing application in the case of updating an application installed in the non-volatile memory. As a result, effective application update processing can be realized.

Further, in the IC card according the embodiment, the application information of the previous application is applied to the new application without being output to the outside of the IC card. This prevents the application information from being illegally decrypted or misused, enabling the IC card having high security.

Further, in the IC card according the above embodiment, only when the authentication using the ID information or key information has succeeded, the restoration processing of applying the application information of the previous application to the application information of the new application is performed. This prevents the application information from being misused, thereby increasing security.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A portable electronic apparatus (1) having a rewritable non-volatile memory (15) **characterized by** comprising:
an installation processing section (S43, S144, S246) that installs a second application for updating a first application on a storage area (42, 52, 62) of the non-volatile memory (15) while retaining information for use in the first application stored in a storage area (32) of the non-volatile memory (15); and
a restoration processing section (S63, S146, S247) that restores the retained information for use in the first application as information for use in the second application that has been installed by the installation processing section (S43, S144, S246).

2. A portable electronic apparatus (1) according to claim 1, **characterized by** further comprising:
a module (Ca) which includes the installation processing section (S43, S144, S246), and the restoration processing section (S63, S146, S247), and
a housing (C) in which the module (Ca) is buried.

3. The portable electronic apparatus (1) according to claim 1, **characterized by** further comprising:
a data escape processing section (S23) that saves the information for use in the first application stored in the storage area (32) of the non-volatile memory (15) in a data escape area (40) provided in the non-volatile memory (15), and
the installation processing section (S43) installs the second application for updating the first application on the storage area (42) of the non-volatile memory (15) while retaining the information saved in the data escape area (40).

4. The portable electronic apparatus (1) according to claim 3, **characterized in that**
the restoration processing section (S63) restores the information saved in the data escape area (40) as the information for use in the second application that has been installed on the storage area (42) of the non-volatile memory (15) by the installation processing section (S43).

5. The portable electronic apparatus (1) according to claim 3, **characterized by** further comprising:
an authentication processing section (S53) that authenticates an external application that requests installation of the second application, and
the restoration processing section (S63) restores the information saved in the data escape area (40) only in response to the request from the external application that has been authenticated by the authentication processing section (S53).

6. The portable electronic apparatus (1) according to claim 1, **characterized in that**
the installation processing section (S144) installs the second application for updating the first application on the storage area (42) of the non-volatile memory (15) while retaining information for use in the first application stored in the storage area (32) of the non-volatile memory (15), and
the restoration processing section (S146) restores the information for use in the second application that has been installed on the storage area (42) of the non-volatile memory (15) by the installation processing section (S144) from the information for use in the first application stored in the storage area (32) of the non-volatile memory (15).

7. The portable electronic apparatus (1) according to claim 6, **characterized in that**
the restoration processing section (S146) restores the information for use in the second application by deleting the information that is not used in the second application from the information for use in the first application stored in the storage area (32) of the non-volatile memory (15) and adding information that is added in the second application.

8. The portable electronic apparatus (1) according to claim 6, **characterized by** further comprising:
an authentication processing section (S145) that authenticates an external application that requests installation of the second application, and
the restoration processing section (S146) restores the information for use in the second application only in response to the request from the external application that has been authenticated by the authentication processing section (5145).

9. The portable electronic apparatus (1) according to claim 1, **characterized in that**
the installation processing section (S245) installs the second application on the storage area (32, 62) of the non-volatile memory (15) while retaining the information for use in the first application in the storage area (32, 62) of the non-volatile memory (15), and
the restoration processing section (S246) restores the information for use in the second application by updating the information for use in the first application existing in the storage area (32, 62) of the non-volatile memory (15).

10. The portable electronic apparatus (1) according to claim 9, **characterized in that**
the restoration processing section (S246) restores the information for use in the second application by deleting the information that is not used in the second application from the information for use in the first application stored in the storage area (32, 62) of the non-volatile memory (15) and adding information that is added in the second application.

11. The portable electronic apparatus (1) according to claim 9, **characterized by** further comprising:
an authentication processing section (S244) that authenticates an external application that requests installation of the second application, and
the installation processing section (S245) and restoration processing section (S246) install the second application and restore the information for use in the second application only in response to the request from the external application that has been authenticated by the authentication processing section (S244).

12. A method of updating an application in a portable electronic apparatus (1) having a rewritable non-volatile memory (15), **characterized by** comprising:
installing (S43, S144, S246) a second application for updating a first application on a storage area (42, 52, 62) of the non-volatile memory (15) while retaining information for use in the first application stored in a storage area (32) of the non-volatile memory (15); and
restoring (S63, S146, S247) the retained information for use in the first application as information for use in the installed second application.

13. The method according to claim 12, **characterized by** further comprising:
saving (S23) the information for use in the first application stored in the storage area (32) of the non-volatile memory (15) in a data escape area (40) provided in the non-volatile memory (15), and
the installing step (S43) installs the second application for updating the first application on the storage area (42) of the non-volatile memory (15) while retaining the information saved in the data escape area (40).

14. The method according to claim 13,
**characterized in that**
the restoring step (S63) restores the information saved in the data escape area (40) as the information for use in the second application that has been installed on the storage area (42) of the non-volatile memory (15).

15. The method according to claim 13, **characterized by** further comprising:
authenticating (S53) an external application that requests installation of the second application, and
the restoring step (S63) restores the information saved in the data escape area (40) only in response to the request from the external application that has been authenticated.

16. The method according to claim 12,
**characterized in that**
the installing step (S144) installs the second application for updating the first application on the storage area (42) of the non-volatile memory (15) while retaining information for use in the first application stored in the storage area (32) of the non-volatile memory (15), and
the restoring step (S146) restores the information for use in the second application that has been installed on the storage area (42) of the non-volatile memory (15) from the information for use in the first application stored in the storage area (32) of the non-volatile memory (15).

17. The method according to claim 16,
**characterized in that**
the restoring step (S146) restores the information for use in the second application by deleting the information that is not used in the second application from the information for use in the first application stored in the storage area (32) of the non-volatile memory (15) and adding information that is added in the second application.

18. The method according to claim 16, **characterized by** further comprising:
authenticating (S145) an external application that requests installation of the second application, and
the restoring step (S146) restores the information for use in the second application only in response to the request from the external application that has been authenticated.

19. The method according to claim 12,
**characterized in that**
the installing step (S245) installs the second application on the storage area (32, 62) of the non-volatile memory (15) while retaining the information for use in the first application in the storage area (32, 62) of the non-volatile memory (15), and
the restoring step (S246) restores the information for use in the second application by updating the information for use in the first application existing in the storage area (32, 62) of the non-volatile memory (15).

20. The method according to claim 19,
**characterized in that**
the restoring step (S246) restores the information for use in the second application by deleting the information that is not used in the second application from the information for use in the first application stored in the storage area (32, 62) of the non-volatile memory (15) and adding additional information for the second application.

21. The method according to claim 19, **characterized by** further comprising:
authenticating (S244) an external application that requests installation of the second application, and
the installing step (S245) and restoring step (S246) install the second application and restore the information for use in the second application only in response to the request from the external application that has been authenticated.
